# EUROPEAN PATENT APPLICATION

(11) **EP 2 523 242 A1**
(43) Date of publication of application: **14.11.2012**
(21) Application number: 12163942.1
(22) Date of filing: 12.04.2012
(51) Int. Cl.: H01M 4/66, H01M 4/04

(54) **Electrode plate and method of manufacturing an electrode plate**

(30) Priority: 11.05.2011 KR 20110043996
(71) Applicant: Samsung SDI Co., Ltd., Yongin-si, Gyeonggi-do (KR)
(72) Inventor: Kim, Jaehyung, Gyeonggi-do (KR)
(74) Representative: Walaski, Jan Filip

(57) **Abstract**

An electrode plate includes an active material coating portion on at least one surface of an electrode current collector, and an uncoated portion on the electrode current collector, the uncoated portion excluding the active material coating portion and including a metal foil with a grain size in a range of about 6.5 µm to about 7.2 µm.

## Description

The present invention relates to an electrode plate, a secondary battery having the electrode plate, and a method of manufacturing the electrode plate.

Generally, a secondary battery is formed by inserting an electrode assembly including a positive electrode plate, a negative electrode plate, and a separator, wound together, into a case, and sealing the electrode assembly with a cap assembly. The positive electrode plate or the negative electrode plate (to be referred to as an 'electrode plate' hereinafter) includes an active material coating portion with an active material slurry coated on, e.g., an aluminium or copper, thin film and an uncoated portion without the active material slurry.

The active material coating portion may exhibit increased adhesiveness with respect to an electrode current collector, and the electrode plate may be subjected to rolling to increase the capacity density of the active material. The rolled electrode plate may be dried and, prior to use, may be cut into a predetermined size using a cutter having a predetermined width.

Embodiments are directed to an electrode plate having at least one surface with an active material coating portion and an inductively-heated uncoated portion that prevent the electrode plate from being bent, a secondary battery having the electrode plate, and a method for manufacturing the electrode plate.

At least one of the above and other features and advantages may be realized by providing an electrode plate, including an active material coating portion on at least one surface of an electrode current collector, and an uncoated portion on the electrode current collector, the uncoated portion excluding the active material coating portion and including a metal foil with a grain size in a range of about 6.5 µm to about 7.2 nm.

The electrode current collector may include aluminum.

The uncoated portion may exhibit hardness of about 16 N/mm² to about 19 N/mm².

The electrode current collector may exhibit hardness in a range of about 32 N/mm² to about 39 N/mm².

The uncoated portion may exhibit tensile strength in a range of about 167 N/mm² to about 171 N/mm².

The grain size of the uncoated portion in the electrode current collector may be different from a grain size of a portion of the electrode current collector coated with the active material.

The electrode current collector may include metal, hardness of the metal in the uncoated portion of the electrode current collector being lower than hardness of the metal in the active material coating portion of the electrode current collector.

At least one of the above and other features and advantages may be also realized by providing a secondary battery including an electrode assembly including a first electrode plate, a second electrode plate, and a separator disposed therebetween, and an electrode assembly accommodating unit configured to receive the electrode assembly, wherein at least one of the first electrode plate and the second electrode plate comprises an electrode plate as described above.

At least one of the above and other features and advantages may be also realized by providing method for manufacturing an electrode plate, including coating an active material on at least one surface of an electrode current collector to form an active material coating portion, such that an uncoated portion excluding the active material coating portion is defined on the electrode current collector, inductively heating the uncoated portion on the current collector, such that the uncoated portion includes a metal foil with a grain size in a range of about 6.5 µm to about 7.2 µm, compressing the coated active material and the electrode current collector, drying the coated active material, and slitting the dried electrode current collector coated with the active material into a size fitting into a battery.

Inductively heating the uncoated portion may include moving the electrode current collector at a speed of about 2 m/min to about 10 m/min and at a distance of about 1 mm to about 2 mm from an inductive heating member, the inductive heating member having a voltage output of about 6 kW to about 10 kW.

Inductively heating the uncoated portion may include heating the uncoated portion to a temperature of about 300 °C to about 600 °C.

Inductively heating the uncoated portion may include heating only the uncoated portion of the electrode current collector.

Inductively heating the uncoated portion may include providing the uncoated portion with hardness of about 16 N/mm² to about 19 N/mm², while the electrode current collector coated with the active material coating portion exhibiting hardness of about 32 N/mm² to about 39 N/mm².

The above and other features and advantages will become more apparent to those of ordinary skill in the art by describing in detail exemplary embodiments with reference to the attached drawings, in which:
FIG. 1 illustrates a schematic diagram of a manufacturing process of an electrode plate according to example embodiments;
FIG. 2 illustrates an enlarged view of a portion of an electrode plate according to example embodiments;
FIGS. 3A to 3D illustrate photographs of grains of inductively heated uncoated portions according to example embodiments;
FIG. 4 illustrates an exploded view of a secondary battery including the electrode plate shown in FIG. 2; and
FIG. 5 illustrates a flowchart of a method for manufacturing an electrode plate according to example embodiments.

An electrode plate according to an example embodiment includes an active material coating portion and an uncoated (or non-coating) portion. For example, the electrode plate may be formed of an aluminium metal thin film, such that the aluminium metal thin film may have a positive electrode active material coated on at least one surface thereof to be formed as a positive electrode plate. In another example, a negative electrode active material may be coated on at least one surface of the aluminium metal thin film to be formed as a negative electrode plate. The positive electrode plate and the negative electrode plate are defined according to the active material coated thereon.

Usable examples of the negative electrode active material may include metallic lithium, a metallic material capable of forming lithium alloys, a transition metal oxide, a lithium doping or undoping material, a material capable of forming a compound by a reversible reaction with lithium, and a material reversibly intercalating/deintercalating a lithium ion. Usable examples of the metallic material capable of forming lithium alloys may include at least one of Na, K, Rb, Cs, Fr, Be, Mg, Ca, Sr, Ba, Ra, Ti, Ag, Zn, Cd, Al, Ga, In, Si, Ge, Sn, Pb, Sb, and Bi. In addition, usable examples of the transition metal oxide, the lithium doping or undoping material, and the material reversibly intercalating/deintercalating a lithium ion may include at least one of vanadium oxide, lithium vanadium oxide, Si, SiOₓ (o < x < 2), silicon containing metal alloys, Sn, SnO₂, and composite tin alloys. However, example embodiments do not limit materials of the positive electrode active material and the negative electrode active material to those listed herein.

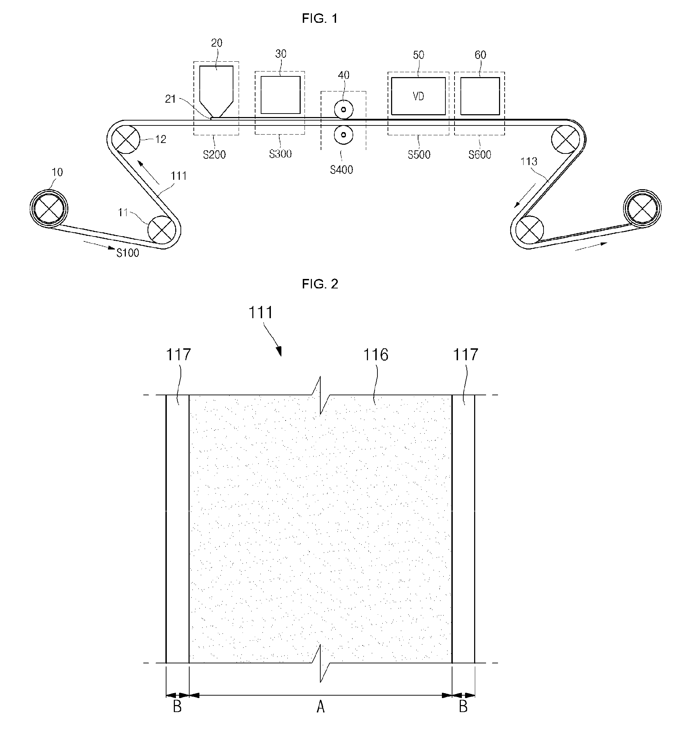

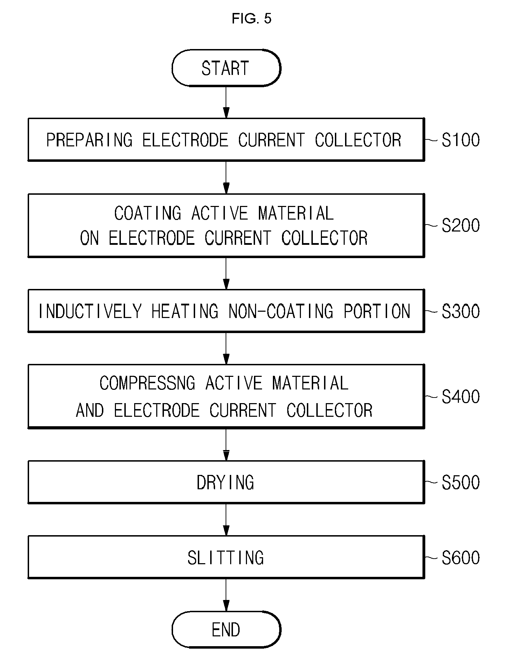

Hereinafter, an electrode plate according to example embodiments and a method of manufacturing the same will be described in detail with reference to FIGS. 1-2 and 5. FIG. 1 illustrates a schematic diagram of a manufacturing process of an electrode plate according to an embodiment, FIG. 2 illustrates an enlarged view of a portion of the electrode plate in FIG. 1, and FIG. 5 illustrates a flowchart of a method for manufacturing the electrode plate shown in FIG. 1.

Referring to FIGS. 1-2 and 5, a method for manufacturing a positive electrode plate 113 may include preparing an electrode current collector (S100), coating an active material on the electrode current collector (S200), inductively heating an uncoated portion of the electrode current collector (S300), compressing the electrode current collector (S400), drying the current collector (S500), and slitting the current collector (S600). It is noted that while the positive electrode plate 113 is described hereinafter, structure and formation method of a negative electrode plate is substantially the same.

Referring to FIG. 1, during preparing the electrode current collector (S100), an electrode current collector 111 formed of a conductive metal thin film, e.g., an aluminum film, may be provided. The electrode current collector 111 may be supplied from a winding roll 10 through a plurality of guide rolls 11 and 12 so as to be maintained at a constant level of tension (left side of FIG. 1). The electrode current collector 111 may exhibit hardness in a range of about 32 N/mm² to about 39 N/mm².

During coating the active material (S200), a positive active material and a conductive agent may be put into a binder solution and mixed together to form a positive electrode active material 21, e.g., in a mixer 20. Thereafter, the positive electrode active material 21 may be coated on a predetermined portion of the electrode current collector 111, i.e., portion A in FIG. 2, to a uniform thickness to form an active material coating portion 116 (FIG. 2) on the electrode current collector 111. A portion of the electrode current collector 111 without the positive electrode active material 21, i.e., portion B, is defined as an uncoated portion 117. Here, the positive electrode active material 21 may be coated on one surface or both surfaces of the electrode current collector 111.

Usable examples of the positive electrode active material 21 may include chalcogenide compounds. Examples of the chalcogenide compounds may include composite metal oxides, e.g., LiCoO2, LiMn₂O₄, LiNiO₂, LiNi₁₋ₓCoₓO₂ (o<x<1), and/or LiMnO₂. In addition, usable examples of the positive electrode active material may include a NCM-based positive electrode active material, e.g., Li[NiCoMn]O₂, a NCA-based positive electrode active material, e.g., Li[NiAlCo]O₂, and/or an LFP-based positive electrode active material, e.g., LiFePO₄.

During the inductive heating (S300), the uncoated portion 117 is inductively heated. That is, only portion B of the electrode current collector 111 may be inductively heated, e.g., annealed. The uncoated portion 117 may be moved, e.g., via a conveyor, along an inductively heating member 30 at a speed of about 2 m/min to about 10 m/min. A distance between the uncoated portion 117 and the inductively heating member 30 may be about 1 mm to about 2 mm. An output voltage of the inductively heating member 30 may be in a range of about 6 kW to about 10 kW, and the inductively heating member 30 may be formed in the form of a heat generator having an inductive coil that generates heat when the output voltage flows. The inductively heating member 30 may, e.g., slowly, raise a temperature of the uncoated portion 117 to a temperature of about 300 °C to about 600 °C, e.g., followed by a slow cooling as the uncoated portion 117 moves away from the inductively heating member 30.

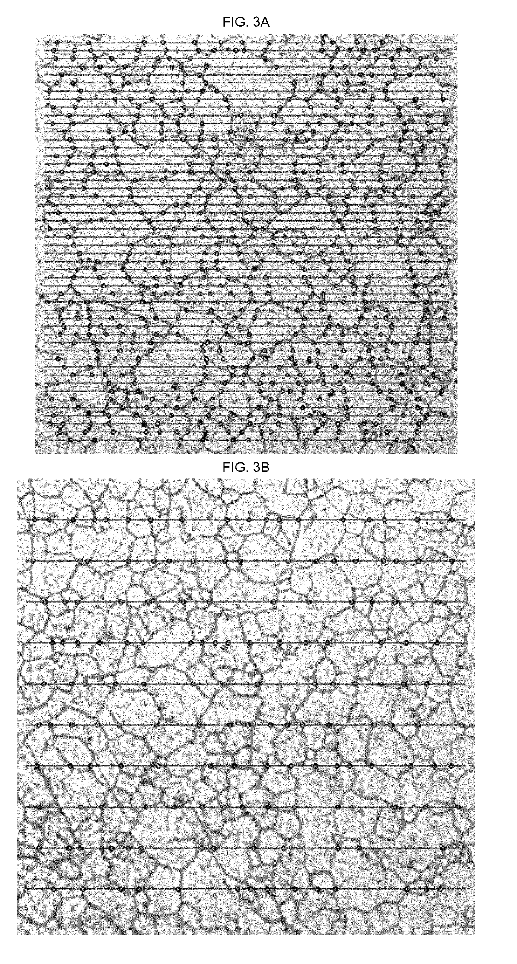

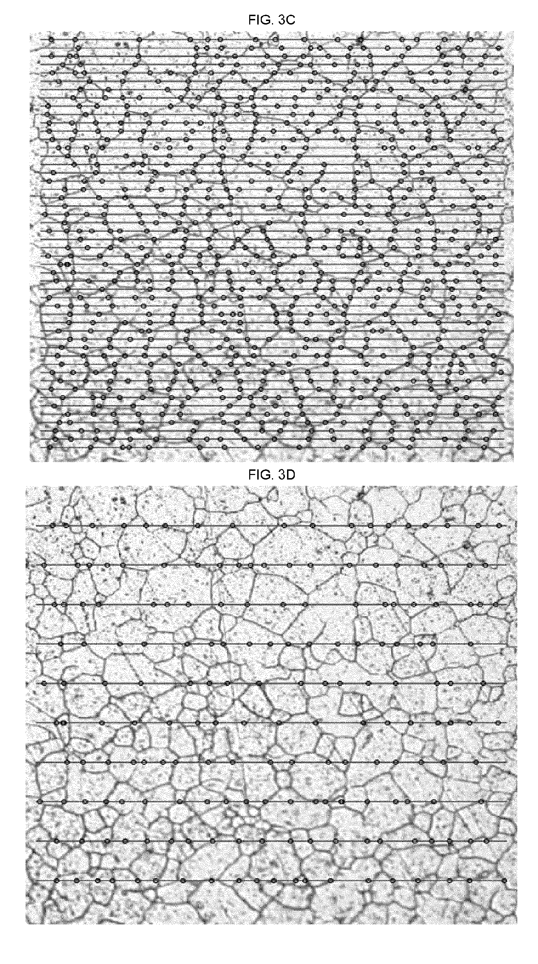

After the inductive heating (S300), the inductively-heated uncoated portion 117 may have a grain size in a range of about 6.5 µm to about 7.2 µm, and may exhibit reduced hardness, e.g., in a range of about 6 N/mm² to about 19 N/mm², as compared to the hardness of the electrode current collector 111 before the inductive heating (S300). In addition, the inductively-heated uncoated portion 117 may exhibit tensile strength in a range of about 167 N/mm² to about 171 N/mm². The physical properties of the inductively-heated uncoated portion 117 will be discussed in more detail below with reference to FIGS. 3A to 3D and Examples 1-6.

FIGS. 3A to 3D are photographs showing grains of inductively heated uncoated portions according to Examples 1 to 4, respectively. In detail, four (4) uncoated portions according to example embodiments were prepared for the respective Examples 1 to 4, and were analyzed, e.g., measured to determine grain sizes, using Image-Pro Plus, which is digital image analysis software based on ASTM E-112. The software Image-Pro Plus is used to measure grain sizes using the average, maximum, minimum, and standard deviation of lengths of an intercept by each line. In addition, the software Image-Pro Plus is also used to measure the average, maximum, minimum, and standard deviation of lengths of all of intercepts of lines. Measurement results of grain sizes of the uncoated portion 117 are reported below in Table 1.

In Examples 1 to 4, the same position of the uncoated portion was repeatedly analyzed. Specifically, Examples 1 and 2 were carried out to measure grain sizes of the uncoated portion after inductively heating the uncoated portion, i.e., after completion of operation S300 according to example embodiments, and Examples 3 and 4 were carried out to measure grain sizes of the uncoated portion 117 after compressing the active material coating portion 116, i.e., after completion of operation S400 according to example embodiments.

Grain sizes of the uncoated portion 117 formed on at least one surface of the electrode current collector 111 were measured through Examples 1 to 4. In this case, the uncoated portion 117 was analyzed to measure grain sizes at arbitrary positions selected in a lengthwise direction of the electrode current collector 111, i.e., along a same direction as the active material is coated. It is noted that even though some specific examples are described, embodiments of the inventive concept are not limited thereto.

**Table 1**

| | Number of Lines | Length of Line [µm] | Number of Intercepts | Length of Intercepts [µm] | Grain size [µm] |
|---|---|---|---|---|---|
| Ex. 1 | 50 | 20830.37 | 690 | 30.19 | 6.81 |
| | 10 | 4258.33 | 129 | 33.01 | 6.55 |
| Ex. 2 | 50 | 21425.55 | 808 | 26.52 | 7.19 |
| | 10 | 4105 | 151 | 27.19 | 7.11 |
| Ex. 3 | 50 | 20926.6 | 656 | 31.9 | 6.65 |
| | 10 | 4258.33 | 129 | 33.01 | 6.55 |
| Ex. 4 | 50 | 21232.04 | 686 | 30.95 | 6.74 |
| | 10 | 4332.6 | 141 | 30.73 | 6.76 |

Referring to Table 1, there are no significant differences between the grain sizes of the inductively heated uncoated portion 117, as in Examples 1 and 2, and the grain sizes of the uncoated portion 117, as in Examples 3 and 4. Therefore, it is confirmed from Table 1 that the grain size of the inductively heated uncoated portion 117 is in a range of about 6.55 µm to about 7.19 µm.

Additionally, the uncoated portion 117 was analyzed to measure hardness in Example 5. In Example 5, the inductively heated uncoated portion 117 was compared with an uncoated portion that was not inductively heated, and their respective hardness levels of were measured.

That is, a predetermined pressure was applied to the uncoated portion 117, i.e., after completion of operation (S300), to measure the hardness of the uncoated portion 117. In the uncoated portion that was not inductively heated, i.e., a comparative example 1, the hardness of the electrode current collector was measured during preparation of the electrode current collector, i.e., after completion of operation (S100). In another uncoated portion that was not inductively heated, i.e., comparative example 2, the hardness of an electrode current collector with an active material coating portion was measured after coating the active material (S200), i.e., the hardness of the electrode current collector is measured before the inductive heating (S300). In comparative examples 1-2, the electrode current collector is not inductively heated. The measurements of the hardness are reported in Table 2.

**Table 2**

| | 1st measurement | 2nd measurement |
|---|---|---|
| Ex. 5 | 17 (N/mm²) | 18 (N/mm²) |
| Comparative Ex. 1 | 39 (N/mm²) | 38 (N/mm²) |
| Comparative Ex. 2 | 36 (N/mm²) | 34 (N/mm²) |

As confirmed from Table 2, the inductively heated uncoated portion 117, i.e., Example 5, exhibited lower hardness than portions not inductively heated, i.e., Comparative Examples 1-2. The hardness was determined using a Vickers hardness test.

Additionally, the uncoated portion 117 was analyzed to measure tensile strength in Example 6. In Example 6, the inductively heated uncoated portion 117 was pulled and the tensile strength of the uncoated portion 117 was measured immediately before the inductively heated uncoated portion 117 broke. Example embodiments do not limit the size and location of test piece to those employed in this example. As confirmed in Example 6, the measured tensile strength of the inductively heated uncoated portion 117 was in a range of about 167 N/mm² to about 171 N/mm².

During compressing (S400), after the inductive heating (S300), the active material coating portion 116 and the electrode current collector 111 are compressed to increase adhesiveness therebetween, e.g., using a press device 40 (FIG. 1). The press device may include upper and lower rollers compressing the active material coating portion 116 and the electrode current collector 111.

During drying (S500), a dryer 50, e.g., a vertical dryer, may be used to dry the electrode current collector 111, e.g., the active material coating portion 116. The drying process is performed to remove solvent contained in the active material and/or moisture permeated into the active material during the process, and to suppress formation of fine crystals of a binder and swelling of an active material during charging and discharging. The drying is performed at different temperature ranges for a predetermined time.

During slitting (S600), the positive electrode plate 113 compressed during compressing (S400) is cut, e.g., via a cutter 60, into a predetermined size according to the specification of the secondary battery. In addition, during slitting (S600), the positive electrode plate may be punched according to the shape and type of the secondary battery. However, both slitting (S600) and punching may be skipped according to the size and shape of the secondary battery.

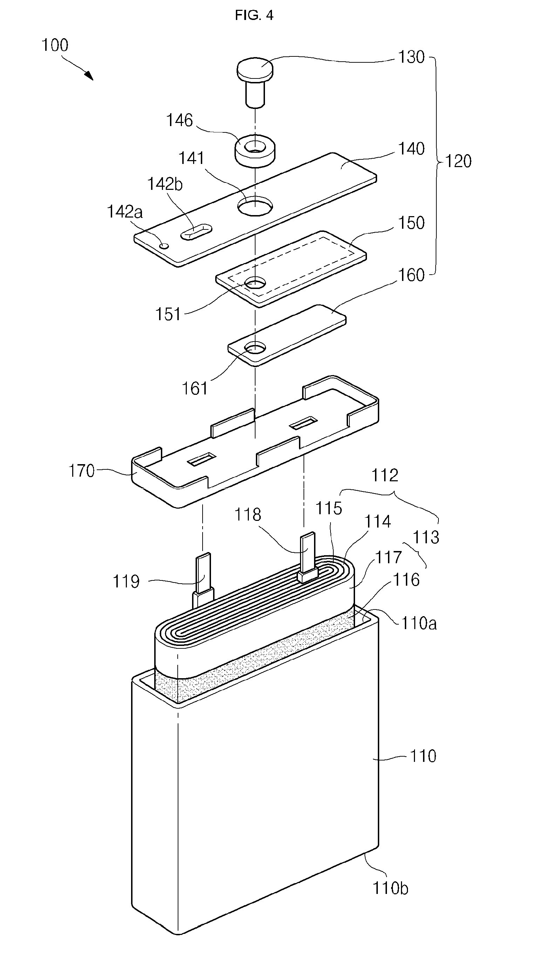

Next, a secondary battery 100 according to example embodiments will be described with reference to FIG. 4. FIG. 4 is an exploded view of a secondary battery 100 according to an embodiment. It is noted that while FIG. 4 illustrates a prismatic battery as an example of the secondary battery, the secondary battery according to embodiments are not limited to the prismatic battery. For example, embodiments may be applied to various types of batteries, e.g., a cylindrical battery, a pouch-type battery, and so on.

Referring to FIG. 4, the secondary battery 100 may include an electrode assembly 112, a can 110, an electrode terminal 130, and a cap plate 140.

The electrode assembly 112 may include electrode plates having different polarities, i.e., a first electrode plate and a second electrode plate, and a separator 114 formed therein. The electrode plates may be formed as a positive electrode plate 113 and a negative electrode plate 115. The positive electrode plate 113 may be formed by coating a positive electrode active material on the electrode current collector 111, and the negative electrode plate 115 may be formed by coating a negative electrode active material on the electrode current collector 111. The positive electrode plate 113 may have the uncoated portion 117 connected to a positive electrode tab 118, and the negative electrode plate 115 may have an uncoated portion connected to a negative electrode tab 119. In addition, the positive electrode tab 119 may be electrically connected to the electrode terminal 130.

The electrode current collector 111 may be formed, e.g., of aluminium or copper, according to the design of the secondary battery 100. For example, the electrode current collector 111 may be made of aluminium is formed, and may be used to form the positive electrode plate 113 and the negative electrode plate 115, e.g., an aluminium electrode current collector 111 may be formed on one or on both of the positive electrode plate 113 and the negative electrode plate 115 according to the design of the secondary battery 100. The electrode current collector 111 coated with the positive electrode active material may exhibit hardness in a range of about 32 N/mm² to about 39 N/mm².

Since the positive electrode plate 113 and the negative electrode plate 115 have a substantially same shape and function, the following description will be made only with regard to the positive electrode plate 113. The positive electrode plate 113 may be manufactured by the processes described previously with reference to FIGS. 1 and 5. As illustrated in FIG. 2, the positive electrode plate 113 may include the active material coating portion 116 on at least one surface of the electrode current collector 111, so a portion of the electrode current collector not coated with the active material coating portion 116 may be defined as the uncoated portion 117.

The uncoated portion 117 may have a grain size in a range of about 6.5 µm to about 7.2 µm, and may exhibit hardness in a range of about 6 N/mm² to about 19 N/mm². In addition, the uncoated portion 117 may exhibit tensile strength in a range of about 167 N/mm² to about 171 N/mm².

As a result, failure of the positive electrode plate 113 may be minimized in the electrode plate manufacturing process. As such, the secondary battery 100 may have an improved performance.

The can 110 may be formed by deep drawing using a metallic material, e.g., such as aluminium or an aluminium alloy. The can 110 may have a substantially planar bottom surface 110b. The can 110 may serve as a terminal. The can 110 may have an open top portion forming a top opening 110a. The electrode assembly 120 is received in the can 110 through the top opening 110a.

The cap plate 140 may be coupled to a separate insulation case 170 to then be combined with the top opening 110a of the can 110, thereby sealing the can 110. The cap plate 140 may have a through-hole 141 to allow the electrode terminal 130 to be inserted thereinto. A gasket 146 may be formed between the through-hole 141 and the electrode terminal 130 to seal a gap therebetween. In addition, the cap plate 140 may include an electrolyte injection hole (not shown), a plug 142a, and a safety vent 142b.

In addition, the cap plate 140 may include an insulation plate 150 and a terminal plate 160 provided in its lower portion. The insulation plate 150 has a terminal hole 153 corresponding to the through-hole 141 of the cap plate 140. The insulation plate 150 is made of an insulating material, e.g., same material as the gasket 146.

The terminal plate 160 is mounted on a bottom surface of the insulation plate 150. The terminal plate 160 may be made of, e.g., a nickel alloy. The terminal plate 160 may have a terminal hole 161 corresponding to the terminal hole 151. The electrode terminal 130 may be assembled while extending through the through-hole 141, the terminal hole 151, and the terminal hole 161, and the positive electrode tab 117' may be connected to one side of the terminal plate 160. In addition, the negative electrode tab 115 may be connected to a bottom surface of the cap plate 140. The negative electrode tab 115 may be connected to the cap plate 140, e.g., by welding. The welding may include resistance welding, laser welding, or the like. Resistance welding is generally used.

According to example embodiments, an electrode plate may include an inductively heated uncoated portion, thereby improving the quality thereof. That is, in the electrode plate according to example embodiments, an electrode current collector may include an inductively-heated uncoated portion on at least one surface thereof. The inductive heating of the uncoated portion of the current collector reduces the hardness of the uncoated portion, as compared to the active material coating portion. As the inductively-heated uncoated portion becomes softer, the electrode plate may be prevented from being bent and/or broken, e.g., during compressing step. In addition, the inductive heating of the uncoated portion may improve performance and safety of the electrode plate, thereby enhancing the quality of a secondary battery including the electrode plate.

Example embodiments have been disclosed herein, and although specific terms are employed, they are used and are to be interpreted in a generic and descriptive sense only and not for purpose of limitation. Accordingly, it will be understood by those of skill in the art that various changes in form and details may be made without departing from the scope of the present invention as set out in the following claims.

## Claims

1. An electrode plate, comprising:
an active material coating portion on at least one surface of an electrode current collector; and
an uncoated portion on the electrode current collector, the uncoated portion excluding the active material coating portion and including a metal foil with a grain size in a range of about 6.5 µm to about 7.2 µm.

2. The electrode plate as claimed in claim 1, wherein the electrode current collector includes aluminium.

3. The electrode plate as claimed in claim 1 or 2, wherein the uncoated portion exhibits hardness of about 16 N/mm² to about 19 N/mm².

4. The electrode plate as claimed in claim 1, 2 or 3, wherein the active material coating portion formed on the electrode current collector exhibits hardness in a range of about 32 N/mm² to about 39 N/ mm².

5. The electrode plate as claimed in any one of the preceding claims, wherein the uncoated portion exhibits tensile strength in a range of about 167 N/mm² to about 171 N/mm²_{.}

6. The electrode plate as claimed in claim 1, wherein the grain size of the uncoated portion in the electrode current collector is different from a grain size of a portion of the electrode current collector coated with the active material.

7. The electrode plate as claimed in any one of the preceding claims, wherein the electrode current collector includes metal, hardness of the metal in the uncoated portion of the electrode current collector being lower than hardness of the metal in the active material coating portion of the electrode current collector.

8. A secondary battery, comprising:
an electrode assembly including a first electrode plate, a second electrode plate, and a separator disposed therebetween; and
an electrode assembly accommodating unit configured to receive the electrode assembly,
wherein at least one of the first electrode plate and the second electrode plate comprises an electrode plate according to any one of the preceding claims.

9. A method of manufacturing an electrode plate, comprising:
coating an active material on at least one surface of an electrode current collector to form an active material coating portion, such that an uncoated portion excluding the active material coating portion is defined on the electrode current collector;
inductively heating the uncoated portion on the current collector, such that the uncoated portion includes a metal foil with a grain size in a range of about 6.5 µm to about 7.2 µm;
compressing the coated active material and the electrode current collector;
drying the coated active material; and
slitting the dried electrode current collector coated with the active material into a size suitable for a battery.

10. The method as claimed in claim 9, wherein inductively heating the uncoated portion includes moving the electrode current collector at a speed of about 2 m/min to about 10 m/min and at a distance of about 1 mm to about 2 mm from an inductive heating member, the inductive heating member having a voltage output of about 6 kW to about 10 kW.

11. The method as claimed in claim 9 or 10, wherein inductively heating the uncoated portion includes heating the uncoated portion to a temperature of about 300°C to about 600°C.

12. The method as claimed in claim 9, 10 or 11, wherein inductively heating the uncoated portion includes heating only the uncoated portion of the electrode current collector.

13. The method as claimed in claim 12, wherein inductively heating the uncoated portion includes providing the uncoated portion with hardness of about 16 N/mm² to about 19 N/mm², while the electrode current collector coated with the active material coating portion exhibiting hardness of about 32 N/mm² to about 39 N/mm².
